# DEMANDE DE BREVET EUROPEEN

(11) **EP 1 544 818 A1**
(43) Date de publication de la demande: **22.06.2005**
(21) Numéro de dépôt: 03293219.6
(22) Date de dépôt: 18.12.2003
(51) Int. Cl.: G07F 19/00

(54) **Terminal sécurisé**

(71) Demandeur: Axalto S.A., 92120 Montrouge (FR)
(72) Inventeur: Rhelimi, Alain Axalto-A Schlumberger Company, 92542 Montrouge Cedex (FR); Leger, Michel Axalto-A Schlumberger Company, 92542 Montrouge Cedex (FR)

(57) **Abrégé**

Un terminal sécurisé comporte :
- des moyens principaux constitués de moyens de traitement, de moyens de mémorisation de données et de programmes, de moyens de sécurité et de moyens de saisie de données, ces éléments constitutifs des moyens principaux étant reliés entre eux par un premier bus de données,
- des moyens périphériques constitués de moyens d'impression, de moyens de lecture/écriture d'une carte et de moyens d'accès à un réseau de télécommunication, ces éléments constitutifs des moyens périphériques étant reliés entre eux par un second bus de données,
- des moyens d'alimentation reliés aux moyens principaux et périphériques.

Les moyens principaux sont regroupés dans un boîtier principal indémontable sans détérioration d'au moins un élément constitutif des moyens principaux, et les moyens d'alimentation et les moyens périphériques sont regroupés dans au moins un boîtier apte à être connecté au boîtier principal.

## Description

### Domaine technique de l'invention

La présente invention concerne les terminaux sécurisés, tels que par exemple les terminaux bancaires ou les terminaux de santé.
Un terminal bancaire, relié à un réseau de télécommunication, permet de réaliser une transaction de type bancaire par insertion d'une carte bancaire de type magnétique et/ou à puce dans le terminal, authentification du porteur de la carte, et saisie de la nature et des détails de la transaction.
Un terminal de santé, relié à un réseau de télécommunication, permet de manière analogue d'accéder à des données de nature médicale ou de sécurité social concernant un porteur d'une carte de santé de type magnétique et/ou à puce.

### Etat de la technique antérieur

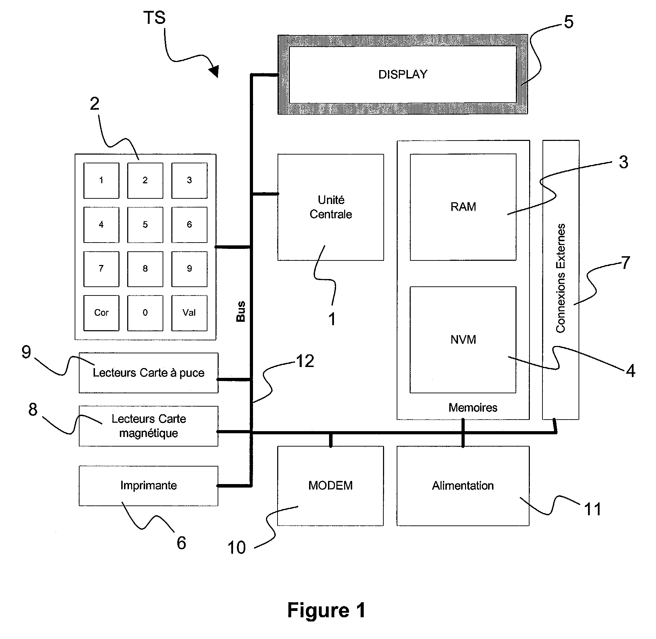

La figure 1 illustre la schématique fonctionnelle d'un terminal sécurisé TS, notamment bancaire, selon l'art antérieur.

Un tel terminal intègre un ensemble de fonctions, telles que :
- une unité centrale 1 de traitement (micro-contrôleur),
- un clavier 2,
- une mémoire volatile 3,
- une mémoire non volatile 4,
- un afficheur 5,
- une imprimante 6,
- une interface de connexion externe 7 (série ou parallèle),
- un lecteur de cartes magnétique 8 et /ou à puce 9,
- un moyen de connexion à un réseau de télécommunication tel qu'un modem 10, et
- une alimentation 11 en énergie (batterie et/ou secteur).

Ces composants sont reliés par un ensemble de bus 12 de natures différentes (alimentation, mémoire, contrôle) et sont bien connus de l'homme du métier. Le tout repose sur un ou plusieurs circuits imprimés répartis dans un ou plusieurs boîtiers.

La réalisation de ce type de terminal est conventionnelle hormis que certains éléments de sécurité doivent être ajoutés afin d'interdire toutes manipulations pouvant altérer ou extraire des informations confidentielles ou financière (code personnel d'identification PIN, transactions bancaires, fichiers médicaux, etc....).

Pour des raisons techniques, financières et de sécurité, l'unité centrale (micro-contrôleur), les mémoires et certains périphériques d'entrée/sortie de données sensibles sont confinés dans le même boîtier. Ce boîtier dispose de détecteur d'intrusion afin de garantir l'intégrité du domaine de sécurité dudit boîtier. La sécurité reste principalement physique pour ce type de solution.

Dans un mode de réalisation plus sophistiqué, les données sensibles qui transitent sur les bus et entre les unités fonctionnelles sont chiffrées. Ce mode est généralement restreint à l'unité centrale qui chiffre ces données vers les mémoires ou les ensembles distants via le modem.

Différentes configurations sont possibles.
Une première configuration est un ensemble monolithique, dans lequel tous les sous-ensembles fonctionnels sont regroupés dans un boîtier unique.
Une seconde configuration est l'ensemble bi-modules, dans lequel les sous-ensembles fonctionnels sont regroupés dans deux boîtiers selon deux combinaisons. Selon la première combinaison, dans un premier boîtier sont regroupés tous les sous-ensembles sauf l'imprimante et l'alimentation principale, et dans un second boîtier sont regroupés l'imprimante et l'alimentation principale (par exemple le secteur). Selon la seconde combinaison, dans un premier boîtier sont regroupés tous les sous-ensembles sauf l'alimentation principale, et dans un second boîtier se trouve l'alimentation principale (par exemple le secteur).
Seul le premier boîtier qui contient l'unité centrale et les périphériques d'entrées/sortie de données sensibles est protégé contre les intrusions.

Les solutions traditionnelles imposent une protection globale du boîtier et lient des fonctions de valeurs intellectuelles différentes. Ainsi, les fonctions nobles qui sont regroupées autour de l'unité centrale (mémoires et applications) sont de facto reliées à la même échelle de valeur que le boîtier qui les contient.

### Résumé de l'invention

Un premier objet de la présente invention est de réduire le coût d'un terminal sécurisé.
Un second objet de l'invention est d'améliorer la sécurité d'un terminal sécurisé.
Au moins un de ces objets est atteint par un terminal sécurisé selon la revendication 1.

Avec le terminal sécurisé selon l'invention, les fonctions nobles peuvent être dissociées de celles qui ne le sont pas.
L'unité centrale, la mémoire, les applications et les données, ainsi que la sécurité associée à protéger ces éléments (par exemple le module de sécurité (SAM), le détecteur d'infraction, ou le dispositif de chiffrement) ont une valeur importante au sein d'un terminal sécurisé.
Les périphériques annexes tels que l'imprimante, le lecteur de cartes, le modem ont une valeur ajoutée faible. Il en va de même pour l'alimentation et la mécanique (boîtier). Avec le terminal sécurisé selon l'invention, la partie la plus valorisée du terminal est détachée des périphériques annexes et concentre les efforts de sécurisation.
Le terminal sécurisé selon l'invention présente donc des avantages au niveau économique et au niveau de la sécurité.

### Brève description des dessins

D'autres caractéristiques et avantages de l'invention apparaîtront dans la description suivante détaillée et non limitative d'un mode de réalisation et de différentes alternatives, en référence aux dessins annexés dans lesquels :
- la figure 1, déjà décrite, représente schématiquement les éléments fonctionnels d'un terminal sécurisé, en particulier bancaire, selon l'art antérieur ;
- la figure 2 illustre schématiquement les éléments fonctionnels d'un terminal sécurisé, en particulier bancaire, selon l'invention.

### Exposé détaillé de l'invention

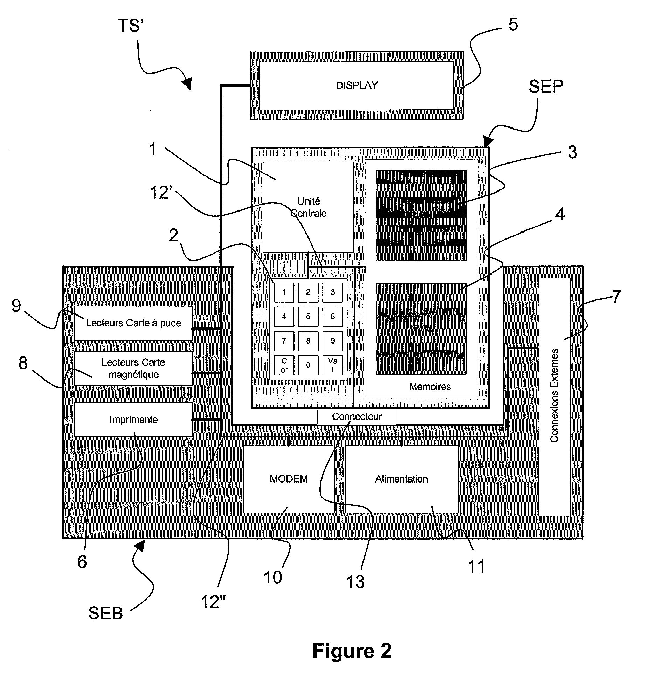

La figure 2 illustre le découpage fonctionnel d'un terminal bancaire sécurisé TS' selon l'invention.

La partie valorisée est confinée au sein d'un sous ensemble protégé SEP qui comprend :
- une unité centrale 1,
- des mémoires 3 et 4 dans lesquelles sont stockées des données et des applications,
- un clavier 2 qui est un périphérique délicat à protéger.
L'ensemble de ces composants sont reliés entre eux par un bus 12' classique.
Selon une alternative, l'afficheur 5 peut être un élément constitutif de ce sous ensemble protégé SEP, en particulier si celui-ci ne dispose pas d'un moyen de chiffrement.
Selon une autre alternative, l'afficheur 5 peut être un élément constitutif du sous-ensemble de base SEB constituant la partie à faible valeur ajoutée. Selon cette alternative, une communication chiffrée peut être établie avec l'afficheur. Dans ce cas, l'afficheur dispose de moyens cryptographiques symétriques ou asymétriques.

Le sous-ensemble de base SEB comporte :
- une imprimante 6,
- une interface de connexion externe 7 (série ou parallèle),
- un lecteur de cartes magnétique 8 et /ou à puce 9,
- un moyen de connexion à un réseau de télécommunication tel qu'un modem 10, et
- une alimentation 11 en énergie (batterie et/ou secteur).
   Ces composants sont reliés entre eux par un bus 12" classique.

Ce sous-ensemble protégé est insérable, par exemple par l'intermédiaire d'un connecteur 13, dans un sous-ensemble de base SEB constituant dans la partie à faible valeur ajoutée. Le connecteur 13 est par exemple un connecteur de type PCMCIA.
Il n'y a pas de nécessité à ce que le sous-ensemble de base SEB soit certifié.
La ou les parties à faible valeur ajoutée sont regroupées dans un ou plusieurs boîtiers et l'un deux est destiné à contenir le sous-ensemble SEP valorisé et détachable.

Le sous ensemble protégé SEP comporte :
- les applications,
- l'architecture électronique du coeur du terminal,
- les moyens assurant la sécurité (par exemple le module SAM...).
   Le sous ensemble protégé SEP constitue un module détachable, aisément distribuable et intégrable dans un terminal bancaire du même constructeur ou d'un tiers (OEM "Original Equipment Manufacturer" ou ODM "Original Design Manufacturer").
Le sous ensemble protégé SEP constitue par exemple un module scellé, indémontable sans destruction. Il peut être certifié. Il contient le clavier destiné à entrer les données sensibles. La connexion entre le clavier 2 et le microcontrôleur 1 du sous ensemble protégé SEP est directe, interne et non accessible à l'extérieur du sous ensemble protégé. Le scellement du sous ensemble protégé SEP interdit toute réparation mais autorise l'usage de composants non sécurisés. Ainsi le sous ensemble protégé SEP peut être fabriqué à partir de composants standards, comprenant en particulier un clavier standard dont la sécurisation est simple et économique. Le niveau de sécurité atteint est celui traditionnellement dénommé « détection de fraude évidente » (ou « tamper evident »).

La solution selon l'invention permet également de résoudre les problèmes de migration et de maintenance.
La migration simple pour un client d'un terminal d'une ancienne génération vers une nouvelle génération présentant des fonctionnalités améliorées (par exemple nouvelle imprimante, afficheur couleur, nouveau modem (wifi ou ADSL)). Avec le sous ensemble protégé SEP, les données sont transférées en toute sécurité et instantanément vers la nouvelle plate-forme de réception (sous-ensemble de base SEB).
La maintenance est simplifiée en cas de panne du sous ensemble de base SEB car il suffit de détacher le sous ensemble protégé SEP et de l'installer dans un nouveaux sous ensemble de base SEB.
Selon l'invention, il est possible de normaliser les dimensions et/ou la connectique du sous ensemble protégé SEP afin de permettre une migration simplifiée pour le fabriquant de terminaux. En effet, ce dernier peut faire évoluer l'architecture et la technologie du sous ensemble protégé SEP en fonction des opportunités offertes par le marché.
La maintenance du sous ensemble protégé SEP est simplifiée car celui-ci est scellé et donc jetable. Par construction, ce dernier ne peut être démonté sans qu'il soit détruit.

Enfin, du point de vue de l'utilisateur, il est possible de partager un sous ensemble de base SEB avec plusieurs sous ensembles protégés SEP liés à différents utilisateurs (hypermarché, marché ouvert ...), le sous ensemble protégé SEP faisant alors office de « coffre » à données personnalisé et sécurisé.

## Revendications

1. Terminal sécurisé comportant :
- des moyens principaux constitués de moyens de traitement, de moyens de mémorisation de données et de programmes, de moyens de sécurité et de moyens de saisie de données, ces éléments constitutifs des moyens principaux étant reliés entre eux par un premier bus de données,
- des moyens périphériques constitués de moyens d'impression, de moyens de lecture/écriture d'une carte et de moyens d'accès à un réseau de télécommunication, ces éléments constitutifs des moyens périphériques étant reliés entre eux par un second bus de données,
- des moyens d'alimentation reliés aux moyens principaux et périphériques,
**caractérisé en ce que** les moyens principaux sont regroupés dans un boîtier principal indémontable sans détérioration d'au moins un élément constitutif des moyens principaux, et **en ce que** les moyens d'alimentation et les moyens périphériques sont regroupés dans au moins un boîtier apte à être connecté au boîtier principal.

2. Terminal sécurisé selon la revendication 1, dans lequel les moyens périphériques comportent en outre des moyens d'affichage.

3. Terminal sécurisé selon la revendication 2, dans lequel les moyens d'affichage sont reliés aux moyens principaux par un canal de communication par lequel transitent des données chiffrées.

4. Terminal sécurisé selon la revendication 1, dans lequel les moyens principaux comportent en outre des moyens d'affichage.

5. Terminal sécurisé selon la revendication 4, dans lequel les moyens d'affichage ne sont pas certifiés du point de vue de la sécurité.

6. Terminal sécurisé selon la revendication 1, dans lequel les moyens de traitement, les moyens de mémorisation de données et de programmes, les moyens de sécurité et les moyens de saisie de données ne sont pas certifiés du point de vue de la sécurité.

7. Terminal sécurisé selon la revendication 1, dans lequel les moyens d'impression, les moyens de lecture/écriture d'une carte et les moyens d'accès à un réseau de télécommunication ne sont pas certifiés du point de vue de la sécurité.
